# EUROPEAN PATENT APPLICATION

(11) **EP 4 227 918 A1**
(43) Date of publication of application: **16.08.2023**
(21) Application number: 21890785.5
(22) Date of filing: 10.09.2021
(51) Int. Cl.: G07C 9/00, H04W 4/02

(54) **UWB-BASED CONTROL METHOD AND APPARATUS FOR SMART LOCK, AND MEDIUM AND ELECTRONIC DEVICE**

(30) Priority: 10.11.2020 CN 202011244797
(71) Applicant: GUANGDONG OPPO MOBILE TELECOMMUNICATIONS CORP., LTD., Dongguan, Guangdong 523860 (CN)
(72) Inventor: CHEN, Huaxing, Dongguan, Guangdong 523860 (CN); LI, Zongyuan, Dongguan, Guangdong 523860 (CN); WANG, Zewei, Dongguan, Guangdong 523860 (CN); WANG, Yukun, Dongguan, Guangdong 523860 (CN)
(74) Representative: Novagraaf Technologies
(86) International application number: PCT/CN2021/117740
(87) International publication number: WO 2022/100257

(57) **Abstract**

A UWB-based control method for a smart lock (105), a UWB-based control apparatus (500, 600, 700) for a smart lock (105), and a computer-readable medium and an electronic device, which relate to the technical field of computers. The method comprises: monitoring a first distance value between a first device (104) and a second device (101, 102, 103) on the basis of a UWB connection, which is present between a first UWB chip and a second UWB chip that is contained in the second device (101, 102, 103); when the first distance value is equal to a first threshold value, sending an identity request to the second device (101, 102, 103) on the basis of the UWB connection, such that the second device (101, 102, 103) feeds back, by means of the UWB connection, first identity information corresponding to the identity request; and receiving the first identity information, and sending the first identity information to a target smart lock (105), such that the target smart lock (105) determines, according to the first identity information, whether to perform unlocking.

## Description

### CROSS REFERENCE TO RELATED APPLICATIONS

The present disclosure claims the priority to Chinese Patent Application No. 202011244797.1, filed on November 10, 2020, and entitled "UWB-BASED CONTROLLING METHOD AND APPARATUS FOR SMART LOCK, AND MEDIA AND ELECTRONIC DEVICE", the entire contents of which are hereby incorporated by reference in their entireties.

### TECHNICAL FIELD

The present disclosure relates to a technical field of computers, and in particular to a UWB-based controlling method, a UWB-based controlling apparatus, a computer-readable medium, and an electronic device.

### BACKGROUND

With continuous development of the society, all walks of life have gradually entered the intelligence, and the intelligence of a lock has also gradually entered daily lives of people. Smart locks are improved based on traditional mechanical locks, and more intelligent and simpler in terms of user security, identification, and manageability. In the related art, the smart locks may be unlocked in a contact way in response to a close distance or a contactless way in response to a long distance. However, in response to unlocking in the close distance, users are required to stay in front of the smart locks for long time for unlocking the smart locks, which fails to achieve a senseless unlocking effect. In response to unlocking in the long distance, the distance may lead to a problem of poor security.

### SUMMARY

According to a first aspect of the present disclosure, a UWB (Ultra Wide Band)-based controlling method for a smart lock is provided and applied to a first device with a first UWB chip. A second device includes a second UWB chip, and the method comprises monitoring a first distance value between the first device and the second device based on a UWB connection between the first UWB chip and the second UWB chip; sending an identity request to the second device based on the UWB connection in response to the first distance value being equal to a first threshold, such that the second device feeds back first identity information corresponding to the identity request through the UWB connection; and receiving the first identity information and sending the first identity information to a target smart lock to cause the target smart lock to determine whether to perform an unlock operation based on the first identity information.

According to a second aspect of the present disclosure, a UWB-based controlling method for a smart lock is provided and applied to a second device with a second UWB chip. A first device includes a first UWB chip, and the method includes feeding back first identity information corresponding to identity request to the first device through a UWB connection between the first UWB chip and the second UWB chip, in response to receiving the identity request sent by the first device, to cause the first identity information to be forwarded to a target smart lock by the first device.

According to a third aspect of the present disclosure, a UWB-based controlling apparatus for a smart lock is provided and applied to a first device with a first UWB chip. A second device includes a second UWB chip, and the apparatus includes a distance measuring module, an identity requesting module, and an identity forwarding module. The distance measuring module is configured to monitor a first distance value between the first device and the second device based on a UWB connection between the first UWB chip and the second UWB chip. The identity requesting module is configured to send an identity request to the second device based on the UWB connection in response to the first distance value being equal to a first threshold, such that the second device feeds back first identity information corresponding to the identity request through the UWB connection. The identity forwarding module is configured to receive the first identity information and send the first identity information to a target smart lock to cause the target smart lock to determine whether to perform an unlock operation based on the first identity information.

According to a fourth aspect of the present disclosure, a UWB-based controlling apparatus is provided and applied to a second device with a second UWB chip. A first device includes a first UWB chip, and the apparatus includes an identity sending module. The identity sending module is configured to feed first identity information corresponding to identity request back to the first device through a UWB connection between the first UWB chip and the second UWB chip, in response to receiving the identity request sent by the first device, to cause the first identity information to be forwarded to a target smart lock by the first device.

According to a fifth aspect of the present disclosure, a computer-readable medium is provided and stores a computer program. When the computer program is executed by a processor, the above method is implemented.

According to a sixth aspect of the present disclosure, an electronic device is provided and includes one or more processors and a memory configured to store one or more programs. When the one or more programs are executed by the one or more processors, the one or more processors is caused to implement the above method.

### BRIEF DESCRIPTION OF THE DRAWINGS

FIG. 1 is a schematic diagram of an exemplary system architecture according to some embodiments of the present disclosure.
FIG. 2 is a schematic view of an electronic device according to some embodiments of the present disclosure.
FIG. 3 is a flowchart of a UWB-based controlling method for a smart lock according to some embodiments of the present disclosure.
FIG. 4 is a flowchart of another UWB-based controlling method for the smart lock according to some embodiments of the present disclosure.
FIG. 5 is a structural schematic view of a UWB-based controlling apparatus for the smart lock according to some embodiments of the present disclosure.
FIG. 6 is a structural schematic view of another UWB-based controlling apparatus for the smart lock according to some embodiments of the present disclosure.
FIG. 7 is a structural schematic view of a yet UWB-based controlling apparatus for the smart lock according to some embodiments of the present disclosure.

### DETAILED DESCRIPTION

Embodiments will be described more fully with reference to accompanying drawings. However, the embodiments may be implemented in various manners, which should not be construed as limitations to the present disclosure. These embodiments are intended to allow the present disclosure more comprehensive and complete, and fully convey ideas of these embodiments to those skilled in the art. A feature, a structure or a characteristic described herein may be combined in one or more embodiments in any suitable manner.

In addition, the accompanying drawings are only schematic illustrations of the present disclosure, which are not necessarily drawn to scale. Identical numerals in the drawings indicate identical or similar parts, and repeated descriptions thereof will be omitted. Some block diagrams shown in the accompanying drawings are functional entities and may not necessarily correspond to physically or logically separated entities. These functional entities may be implemented in a form of software, or in one or more hardware modules or integrated circuits, or in different networks and/or processor apparatuses and/or microcontroller apparatuses.

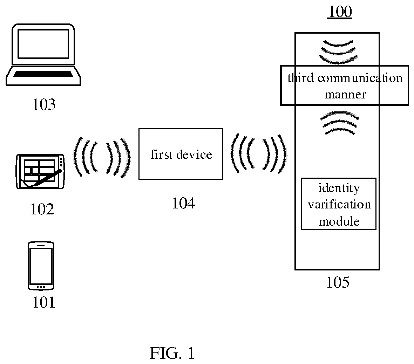

FIG. 1 is a schematic diagram of a system architecture of an exemplary application environment that can be applied to a UWB-based controlling method and apparatus for a smart lock according to some embodiments of the present disclosure. As shown in FIG. 1, the system architecture 100 may include one or more of a second device 101, a second device 102, and a second device 103 with a second UWB chip, respectively, a first device 104 with a first UWB chip, and a smart lock 105. The second device 101, the second device 102, and the second device 103 with the second UWB chip, respectively; and the first device 104 with the first UWB chip are respectively configured to implement the UWB-based controlling method for the smart lock. The smart lock is configured to verify an identity based on first identity information forwarded by the first device to determine whether to perform an unlock operation. The first device includes various tools having UWB functions, which include but are not limited to a UWB tag, an electronic device with UWB. The second device may be various electronic devices with the UWB functions, and includes but is not limited to a desktop computer, a portable computer, a smart phone, and a laptop, etc. The smart lock may be various smart locks with identity verification functions, such as a smart door lock, etc. It should be noted that both the first UWB chip and the second UWB chip mentioned above are chips configured to achieve UWB functions, and structures and forms thereof are not limited herein. It should be understood that the number of the first device, the number of the second device, and the number of the smart lock shown in FIG. 1 are merely schematic. The number of the first device, the number of the second device, and the number of the smart lock may be any value according to implementation needs.

The UWB-based controlling method for the smart lock provided in some embodiments of the present disclosure may be implemented by the first device 104 together with the second device 101, the second device 102, and the second device 103. Accordingly, a UWB-based controlling apparatus for the smart lock may be provided in each of the first device 104, the second device 101, the second device 102, and the second device 103. In an embodiment, a UWB function tag with the first UWB chip may serve as the first device, and a cell phone with the second UWB chip may serve as the second device. When a UWB connection exists between the first device and the second device, a first distance value between the first device and the second device is monitored in time. In response to the first distance value being equal to a first threshold, the first device is configured to send an identity request to the second device through the UWB connection. In response to receiving the identity request, the second device is configured to feed first identity information corresponding to the identity request back to the first device based on the UWB connection. Subsequently, the first device is configured to forward the first identity information to a target smart lock to cause the target smart lock to determine whether to perform the unlock operation based on the first identity information.

An electronic device configured to implement the UWB-based controlling method for the smart lock is provided in some embodiments of the present disclosure. The electronic device may be the second device 101, the second device 102, and the second device 103, or a server shown in FIG. 1. The electronic device at least includes a processor and a memory. The memory is configured to store an executable instruction of the processor, and the processor is configured to execute the UWB-based controlling method for the smart lock by executing the executable instruction.

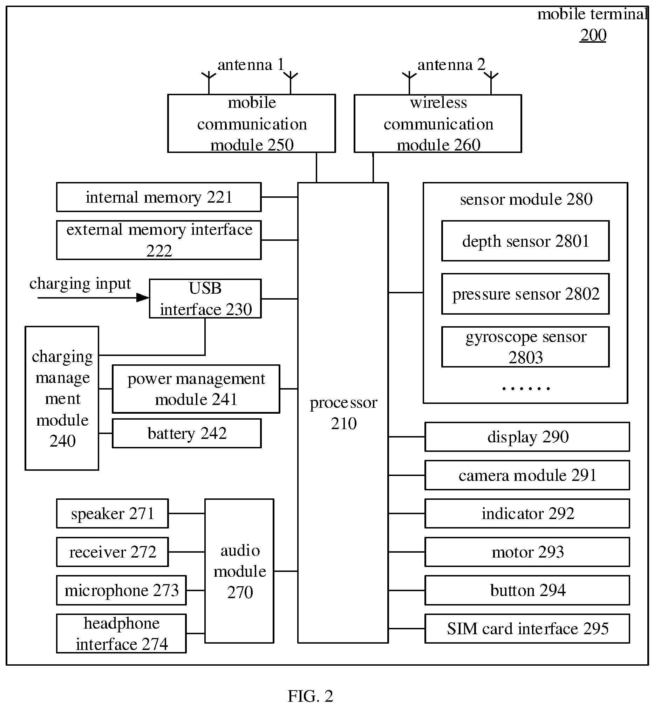

A mobile terminal 200 shown in FIG. 2 is taken as an example to describe a structure or a construction of the electronic device. Those skilled in the art should understand the construction shown in FIG. 2 may also be applied to a fixed type device except for components configured for movement. In other embodiments, the mobile terminal 200 may include more or less components than illustrated components in a way of combining some components, or splitting some components, or arranging the components differently. The illustrated components may be implemented in a form of a hardware, a software, or a combination of the software and the hardware. Connection relationships between interfaces of the components are shown schematically merely and do not constitute a structural limitation of the mobile terminal 200. In other embodiments, the mobile terminal 200 may also apply a different manner to connect the interfaces from that shown in FIG. 2, or a combination of multiple connection manners of the interfaces.

As shown in FIG. 2, the mobile terminal 200 may include a processor 210, an internal memory 221, an external memory interface 222, a Universal Serial Bus (USB) interface 230, a charging management module 240, a power management module 241, a battery 242, an antenna 1, an antenna 2, a mobile communication module 250, a wireless communication module 260, an audio module 270, a speaker 271, a receiver 272, a microphone 273, a headphone interface 274, a sensor module 280, a display 290, a camera module 291, an indicator 292, a motor 293, a button 294, and a subscriber identification module (SIM) card interface 295, etc. The sensor module 280 may include a depth sensor 2801, a pressure sensor 2802, and a gyroscope sensor 2803, etc.

The processor 210 may include one or more processing units. For example, the processor 210 may include an Application Processor (AP), a modem processor, a Graphics Processing Unit (GPU), an Image Signal Processor (ISP), a controller, video codec, a Digital Signal Processor (DSP), a baseband processor, and/or a Neural-Network Processing Unit (NPU), etc. Different processing units may be separated from each other or integrated in one or more processors.

A memory is provided in the processor 210. The memory may store instructions configured to implement six modular functions, i.e., a detection instruction, a connection instruction, an information management instruction, an analysis instruction, a data transfer instruction, and a notification instruction, and the instructions are controlled and executed by the processor 210.

A wireless communication function of the mobile terminal 200 may be implemented by the antenna 1, the antenna 2, the mobile communication module 250, the wireless communication module 260, the modem processor, and the baseband processor. The wireless communication module 260 may be configured to provide a solution for a wireless communication (including a Wireless Local Area Network (WLAN)), a Bluetooth (BT), or the like applied to the mobile terminal 200, wherein the WLAN may be a Wireless Fidelity (Wi-Fi) network. In some embodiments, a wireless communication solution of a UWB communication may be achieved by providing the UWB chip in the wireless communication module 260.

In the related art, the smart locks may be unlocked by means of a fingerprint, an NFC, a face, the BT, etc. However, all of the above-mentioned means have some obvious defects. When the smart locks are unlocked by means of the fingerprint or the face, an unlocking speed thereof may be at a low level due to an influence of an identification efficiency and also an influence of an objective environment such as fingers sweating, dim environment, etc. When the smart locks are unlocked by means of the NFC, the NFC chip is required to be placed in a much closer position for identification. When the smart locks are unlocked by means of the BT, the smart lock may have a poor security performance since the BT is easy to be interfered with or listened to during propagating over a long distance.

The UWB-based controlling method for the smart lock and the UWB-based controlling apparatus for the smart lock in some embodiments of the present disclosure are described in detail in the following.

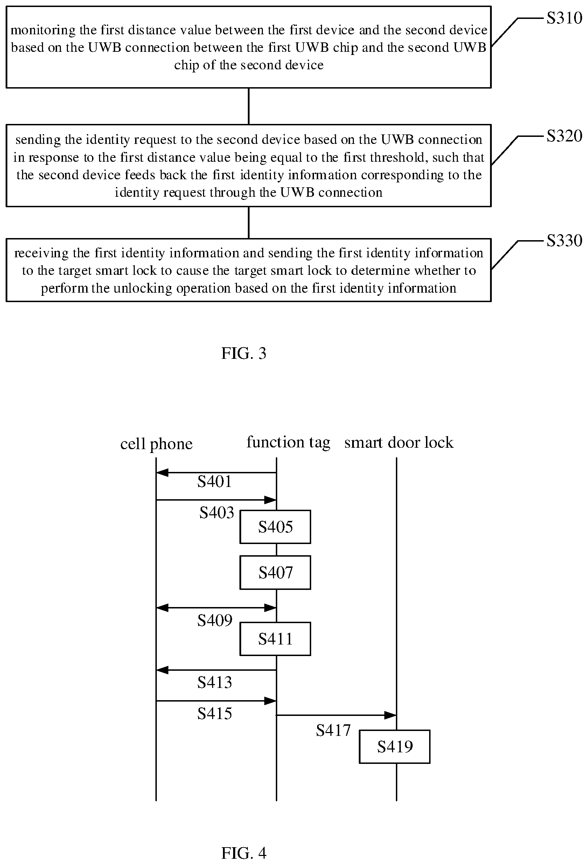

FIG. 3 is a flowchart of a UWB-based controlling method for a smart lock according to some embodiments of the present disclosure, which is applied to the first device with the first UWB chip, such as the first device 104 shown in FIG. 1.

Before the first device implements the UWB-based controlling method for the smart lock described above, in order to enable the first device to determine the target smart lock corresponding to the first device among many smart locks, the first device may be paired with the smart lock in advance through a communication method supported by both the first device and the target smart lock, such that the first device may control the target smart lock. For example, since most of the existing smart locks have BT functions, the first device having both a BT function and a UWB function may be employed to control the unlocking operation or a locking operation of the target smart lock. The first device is configured to establish the UWB connection with the second device through the UWB function, while the first device is configured to establish a one-to-one BT connection or one-to-multiple BT connections with the target smart lock in advance through the BT function. For example, when the first device is a tag with the BT function and the UWB function, and the second device is the cell phone, an APK (Android application package) on the cell phone may be configured to pair and connect the first device with the target smart lock, to achieve connections between the first device and at least one target smart lock.

It is to be noted that, since most of the existing smart locks in the market are configured without the UWB functions, the first device is configured to directly control the smart lock without the UWB function to be unlocked or locked through the UWB function of the second device without changing a hardware structure of the smart lock. In this way, the smart lock without the UWB function may be improved to a UWB smart lock having high security and high convenience with a low cost.

As shown in FIG. 3, the UWB-based controlling method for the smart lock may include the following operations S310 to S330.

In operation S310, the method includes monitoring the first distance value between the first device and the second device based on the UWB connection between the first UWB chip and the second UWB chip of the second device.

In an embodiment, in order to reduce an electricity consumption and a power consumption, the first UWB chip and the second UWB chip are configured to be generally in a dormant state and be woken up only when the second device satisfies a predetermined condition, such that the UWB connection may be established between the first device and the second device based on UWB chips.

In an embodiment, the predetermined condition may include a second threshold value. The first device may be configured to monitor a second distance value between the first device and the second device based on a first communication manner, directly wake up the first UWB chip in response to the second distance value being equal to the second threshold value, and send a waking up request to the second device through the first communication manner. When the second device receives the waking up request, the second device may be configured to directly wake up the second UWB chip according to the waking up request. In a case where both the first UWB chip and the second UWB chip are woken up, the UWB connection is able to be established between the first UWB chip and the second UWB chip.

The first communication manner may be a manner of the wireless communication such as the BT, the Wi-Fi, etc. The second distance value between the first device and the second device may be monitored through a communication interaction of the first communication manner. It is to be noted that, since the UWB chips are configured to be woken up for the UWB connection only when the second distance value is equal to the second threshold value, the second threshold value is usually a value greater than the first threshold value. In response to monitoring a longer distance, a communication manner with a lower power consumption and a lower positioning accuracy than UWB, such as BT, Wi-Fi, or the like, may be employed to reduce the power consumption.

In another embodiment, the predetermined condition may further include receiving predetermined information. In this case, the first device may be configured to broadcast the predetermined information within a predetermined range based on a second communication manner. When the second device enters the predetermined range, the second device may receive the predetermined information broadcast by the first device to wake up the second UWB chip. The predetermined information may include, for example, a field carrying preset feature information. The feature information may be customized according to preference or need of a user, which is not particularly limited herein.

In addition, in order to wake up the first UWB chip while the second UWB chip is woken up, the second device may be configured to feed feedback information indicating the predetermined information is received back to the first device after the second device receives the predetermined information, such that the first device may directly wake up the first UWB chip in response to receiving the feedback information.

The second communication manner may also be the manner of the wireless communication such as the BT, the Wi-Fi, or the like. The second communication manner is configured to broadcast the predetermined information, such that the second device may directly perform a waking up process after receiving the predetermined information. In this way, a problem of failing to wake up the UWB chips in a case of monitoring a distance through the first communication manner, which is caused by a failure in establishing communication connection through the first communication manner due to a specific environment, may be avoided.

After the UWB chips are woken up, the UWB connection may be established between the first UWB chip and the second UWB chip based on the first communication manner or the second communication manner. After the UWB connection is established, the first communication manner of each of the first device and the second device is configured to enter the dormant state. In an embodiment, in response to the first communication manner or the second communication manner is the BT, a configuration parameter of the first UWB chip of the first device may be sent to the second device by means of the BT, while the first UWB chip is defined as a responder. After the second device receives the configuration parameter sent by means of the BT, the second UWB chip is configured with a corresponding parameter and configured to be an initiator. In subsequence, the first UWB chip and the second UWB chip are configured to establish connection based on configuration parameters and roles thereof described above. After the connection is established, the BT of each of the first device and the second device may be configured to enter the dormant state to reduce the electricity consumption and the power consumption.

It is to be noted that, in another embodiment, the configuration parameter of the first device and the configuration parameter of the second device matching to each other may be preset, such that the communication connection may be established between the first device and the second device as soon as the first device and the second device are woken up.

After the UWB connection is established, the first device may be configured to continuously send a monitoring signal for measuring a distance between the first device and the second device, to dynamically monitor the distance. In an embodiment, one measuring process may include the first device sending the monitoring signal to the second device, the second device feeding back to the first device after receiving the monitoring signal, and after receiving feedback from the second device, the first device calculating a relative distance between the first device and the second device based on a duration between a time point at which the monitoring signal is sent and a time point at which the feedback is received.

In operation S320, the method includes sending the identity request to the second device based on the UWB connection in response to the first distance value being equal to the first threshold, such that the second device feeds back the first identity information corresponding to the identity request through the UWB connection.

The first threshold value is configured to determine a timing of sending the identity request, which is typically set to a less value to avoid a risk of entering a person other than the user caused by the smart lock being unlocked in advance. It should be noted that, in some cases, since a movement speed of the user carrying the second device may vary, time required by the second device to reach the first device varies accordingly, such that different first threshold values may be set based on the movement speeds. For example, in a case where the user moves with a greater speed, the user may take only 3 seconds (s) over a distance of 10 meters (m). When the first device and the smart lock are in the same position, the first threshold value may be set to be a greater value. In this way, a problem of the user needing to wait since the smart lock is still not unlocked when the user has arrived at the position where the first device and the smart lock are located. For example, when the user carries the second device and drives into a cell with a high speed, the identity request may be sent earlier to second device, such that the smart lock has been unlocked while a car driven by the user arrives at a door of the cell.

In some embodiments, the first device is usually placed in a position close to the target smart lock. For example, in a case where the first device is the tag with the UWB function and the BT function, the tag may be fixed directly to the target smart lock to ensure that the first distance value between the first device and the second device is a distance between the target smart lock and the second device. Since the first device and the target smart lock are arranged close to each other, a problem that communication between the first device and the target smart lock is interfered due to a longer distance may be avoided, and a security risk due to interference may be further avoided. It should be noted that, in some specific scenarios, the first device may be arranged on a position having a distance from the target smart lock, which is not limited herein.

In an embodiment, in response to a first distance value between the first device and the second device being monitored based on the UWB connection to be equal to the first threshold value, the identity request may be sent to the second device based on the UWB connection, such that the second device may directly feed back the first identity information corresponding to the identity request through the UWB connection while receiving the identity request. The first identity information includes data uniquely identifying the user, which may be a string set by the user, biological information, etc., which is not particularly limited herein. It is noted that the first identity information may be stored in a secure memory of the second device. The secure memory may be, e.g., a secure chip with a high security level in the cell phone, which may be accessed through a chip such as the UWB chip, the NFC chip, etc.

In another embodiment, in response to the first distance value gradually approaching the first threshold value, since the second device may gradually approach the first device from a remote position or gradually move away from the first device from a proximity position, a direction of movement of the second device may be determined in advance to determine whether to send the identity request.

In an embodiment, the direction of the movement of the second device relative to the first device may be determined while monitoring the first distance value through the UWB connection. In response the direction of the movement of the second device relative to the first device being from far to near, it is determined that the second device is gradually approaching the first device. In this case, in response to the first distance value being equal to the first threshold value, the identity request may be sent to acquire the first identity information. Conversely, in response the direction of the movement of the second device relative to the first device being from near to far, it is determined that the second device is gradually away from the first device. In this case, in response to the first distance value being equal to a third threshold value, a shutdown instruction may be sent to the target smart lock to cause the target smart lock to perform a shutdown operation.

The third threshold value may include a customized value. When the user carries the second device away from the target smart lock, the target smart lock may be locked in response to the first distance value between the second device and the first device being equal to the third threshold value, to avoid the user forgets to lock the target smart lock. It should be noted that configuration of the third threshold value is independent of configuration of the first threshold value or configuration of the second threshold value. The third threshold value may or may not be equal to the first threshold value or the second threshold value, which is not limited herein.

By monitoring the direction of the movement of the second device, the unlocking operation may be performed in response to the second device approaching the first device or the locking operation may be performed in response to the second device being away from the first device. In this way, a problem that the user incorrectly performs the locking operation in response to the distance between the first device and the second device being equal to the first threshold value in a process of the user moving away from the target smart lock, may be avoided.

In operation S330, the method includes receiving the first identity information and sending the first identity information to the target smart lock to cause the target smart lock to determine whether to perform the unlocking operation based on the first identity information.

In an embodiment, after receiving the first identity information sent from the second device, the first device may be configured to directly forward the first identity information to the target smart lock to enable the target smart lock to determine whether to perform the unlocking operation based on the first identity information. When the first device forwards the first identity information, a third communication manner may be configured to forward the first identity information to the target smart lock. The third communication manner may be a function already available in the smart lock, such as the BT, Wi-Fi, or the like. For example, a smart lock in the market is configured with BT communication function. In this case, the first device may directly forward the first identity information to the smart lock through the BT function. It should be noted that the third communication manner may be the same with the first communication manner or the second communication manner described above, or different from the first communication manner or the second communication manner, which is not limited herein.

After the target smart lock receives the first identity information, the target smart lock may be configured to verify whether the first identity information has an unlocking authority through an identity verification function of the target smart lock, perform the unlocking operation in response to the first identity information having the unlocking authority, and perform no locking operation in response to the first identity information not having the unlocking authority and stay in a locked state.

It is noted that identity information having the unlocking authority in the target smart lock is required to be configured in advance before the target smart lock performs identify verification. In an embodiment, the second device may be configured to send second identity information to the first device. The target smart lock is configured to record or input the unlocking authority of the second identity information after the first device forwards the second identity information to the target smart lock. The second identity information is stored in the target smart lock and configured to verify authority of the first identity information. It should be noted that the first identity information may be the same with the second identity information. For example, in a case where the identity information is a digital ID, when the first identity information 15 is the same with the second identity information 15 stored in the target smart lock, it is indicated that the first identity information passes the identify verification, and subsequently the unlocking operation is performed. The first identity information may also be different from the second identity information. For example, it may be configured in advance that the first identity information passes the identify verification in response to combining the first identity information and the second identity information and a combination of the first identity information and the second identity information satisfying a specific requirement, and subsequently the unlocking operation is performed.

Further, when multiple users need to be recorded, according to a recording manner described above, each of the multiple users is configured with an ID, and the second identity information may be sent based on both the ID and the UWB connection. The second identity information is further forwarded to the target smart lock. In this way, the multiple users may be recorded simultaneously, and time required to record the second identity information may be saved.

In addition, in a process of recording authority, in addition to the recording manner of being forwarded by the first device to record, another manner where the second identity information is directly recorded through the communication manner already available in the target smart lock. For example, when the target smart lock has the NFC function, an NFC manner is configured to directly record. It should be noted that, when the identity information is stored in the secure chip, since the secure chip may only read the identity information in the NFC manner or in a UWB manner, the identity information may also only be read in the NFC manner or in the UWB manner during recording the identity information, such that the identity information is recorded.

The UWB-based controlling method for the smart lock in the above description is described from a view of the first device. In order to allow those skilled in the art to further understand implementation details of the embodiments of the present disclosure, some embodiments of the present disclosure are further described in the following from a view of the second device.

FIG. 4 is a flowchart of another UWB-based controlling method for the smart lock according to some embodiments of the present disclosure, which is applied to the second device having the second UWB chip, e.g., the second device 101, the second device 102, and the second device 103, etc., shown in FIG. 2.

Before the second device performs the UWB-based controlling method for the smart lock, the identity information of the user may be stored in the second device in advance for identity recording and identity verification. The UWB-based controlling method for the smart lock mentioned above includes the following operations.

In response to receiving the identity request sent by the first device, the first identity information corresponding to identity request is fed back to the first device through the UWB connection between the second UWB chip and the first UWB chip of the first device, to cause the first identity information to be forwarded to the target smart lock.

In an embodiment, when the UWB connection established by the UWB chips exists between the first device and the second device, the first device is configured to monitor the first distance value between the first device and the second device through the UWB connection. In a process of monitoring, the first device is configured to send the monitoring signal to the second device for multiple times, and the second device is configured to feed response to the monitoring signal back to the first device based on the UWB connection, such that the first device may monitor the first distance value between the first device and the second device in real time based on the monitoring signal and the response fed back, and send the identity request to the second device in response to the first distance value being equal to the first threshold value.

In an embodiment, in order to reduce the electricity consumption and the power consumption, both the first UWB chip and the second UWB chip are configured to generally be in the dormant state and be woken up only when the second device satisfies the predetermined condition, such that the UWB connection may be established between the first device and the second device based on UWB chips.

In an embodiment, the predetermined condition may include a second threshold value. The first device may be configured to monitor the second distance value between the first device and the second device based on the first communication manner, and send the waking up request to the second device through the first communication manner in response to the second distance value being equal to the second threshold value. When the second device receives the waking up request, the second device may be configured to directly wake up the second UWB chip according to the waking up request. In the case where both the first UWB chip and the second UWB chip are woken up, the UWB connection is able to be established between the first UWB chip and the second UWB chip.

In another embodiment, the predetermined condition may further include receiving predetermined information. In this case, the first device may be configured to broadcast the predetermined information within the predetermined range based on the second communication manner. When the second device enters the predetermined range, the second device may receive the predetermined information and wake up the second UWB chip.

Specific details of both the first communication manner and the second communication manner have been described clearly in the above description, which are not repeated herein.

In an embodiment, when the second device receives the identity request sent from the first UWB chip, the second device may be configured to feed the first identity information which is configured in advance and stored in the second device back to the first UWB chip, such that the first device may forward the first identity information received to the target smart lock.

In an embodiment, before the target smart lock performs the identity verification, the identity information having the unlocking authority is required to be set in advance in the target smart lock. In an embodiment, the second identity information stored in the second device may be sent to the first device, such that the first device forwards the second identity information to the target smart lock to cause the target smart lock to record he second identity information. In this way, a subsequent identity verification for the first identity information may be performed based on the second identity information recorded in the target smart lock.

Further, in order to prevent the problem of the person other than the user of the second device being able to unlock a door lock due to a loss of the second device, it may be configured to necessarily verify that a current user is the user of the second device when the second device sends the identity information to the first device. For example, when the second device is the cell phone, it may be configured to require that the cell phone is in an unlocked state. That is, the user of the cell phone has been verified by unlocking the cell phone through a password, a fingerprint, a pupil, etc., and otherwise the identity information cannot be sent. In this way or mechanism, the problem of the person other than the user of the second device being able to unlock the target smart lock due to the loss of the second device may be avoided.

It is to be noted that, in order to ensure that the unlocking operation and the locking operation of the target smart lock may continue to be controlled by other devices in a case where a new second device is required to replace with a lost second device, the identity information carried in the second device described above may be configured to be migratable. In an embodiment, the first identity information stored in an original second device may be migrated to the new second device, such that the new second device may feed the first identity information able to pass the identity verification after the first device sends the identity request to the new second device, so as to continuously control an effect of controlling the target smart lock to be unlocked or locked.

The technical solutions of the embodiments of the present disclosure are described in detail with reference to FIG. 4 in the following description. A case where the smart door lock with the BT function is taken as the target smart lock, a function tag with both the BT chip and the UWB chip is taken as the first device, and the cell phone is taken as the second device is taken as an example.

The function tag is fixed to the smart door lock. The APK on the cell phone is configured to search for and be connected to the function tag through the BT function, and the function tag is controlled to be connected to the smart door lock to achieve connection between the function tag and the smart door lock. In this case, the first identity information A of the user is stored in the secure memory of the cell phone.

In an operation S401, the function tag requests to be paired with the cell phone by means of the BT.

In an operation S403, the cell phone permits BT paring, and a BT connection is established between the function tag and the cell phone.

It is noted that since the BT may usually be connected to a BT device configured to transmit audio data and multiple BT devices configured to transmit non-audio data at the same time. Therefore, although the cell phone is already in a state of being connected to a device configured to transmit the audio data, such as a BT headset, or a state of being connected to other devices configured to transmit the non-audio data, the cell phone is able to establish the BT connection in the operation S403 without influence.

In an operation S405, the function tag monitors the second distance value between the function tag and the cell phone based on the BT connection.

In an operation S407, the function tag wakes up the first UWB chip thereof in response to the second distance value being equal to the second threshold value.

In an operation S409, the function tag sends a command configured to wake up the UWB to the cell phone through the BT connection, and the cell phone wakes up the second UWB chip at an end of the cell phone after receiving the command, and the UWB connection is further established between the first UWB chip and the second UWB chip.

In an embodiment, the function tag sends the configuration parameter of the first UWB chip (including but not limited to a parameter such as a communication channel, a Session ID, a Preamble Code, a communication rate, etc.) to the cell phone by means of the BT. The cell phone configures the second UWB chip at the end of the cell phone to be a parameter matching with unction tag according to the configuration parameter sent from the function tag. The function tag defines the first UWB chip thereof as a UWB Responder and the cell phone defines the second UWB chip thereof as a UWB Initiator. Subsequently, the function tag searches for a UWB device, establishes a connection after obtaining a UWB signal of the cell phone, and generates a UWB Session Creat Success event.

It should be noted that after the UWB connection is established successfully, a BT chip of each of the first device and the second device may be configured to enter a dormant mode to reduce the electricity consumption and the power consumption.

In an operation S411, the function tag monitors the first distance value between the function tag (i.e., the smart door lock) and the cell phone in real time through an established UWB connection.

In an embodiment, the function tag sends the monitoring signal for measuring the distance to the cell phone based on the UWB connection, the cell phone gives feedback to the function tag after receiving the monitoring signal. The function tag calculates the first distance value between the function tag and the cell phone based on the duration between the time point at which the monitoring signal is sent and the time point at which the feedback is received. The first distance value is dynamically monitored by cycling or repeating the above process.

In an operation S413, the function tag sends the identity request to the cell phone in response to the first distance value being equal to the first threshold value.

In an operation S415, the cell phone returns the first identity information A to the function tag in response to receiving the identity request.

In an embodiment, after the cell phone receives the identity request, the first identity information A is read from the secure memory in the cell phone, and is sent to the function tag.

In an operation S417, the function tag forwards the first identity information A to the smart door lock through the BT connection established in advance.

In an operation S419, the smart door lock determines whether the first identity information A has the unlocking authority, and further determines whether to perform the unlocking operation.

In an embodiment, after receiving the first identity information A, the smart door lock verifies identity of the first identity information A based on the second identity information, preform the unlocking operation in response to the first identity information A having the unlocking authority, and preform no unlocking operation in response to the first identity information A not having the unlocking authority. Subsequently, the smart door lock returns an identity confirmation result and an unlocked status / a locked status to the function tag. The function tag forwards status information to the cell phone by means of the UWB after receiving the status information of the smart door lock. After both the cell phone and the function tag receive the status information of the smart door lock, a UWB Session is removed, such that both the first UWB chip and the second UWB chip enter the dormant state to reduce the power consumption of both the function tag and the cell phone.

In conclusion, in the embodiments, on the one hand, the power consumption of the first device may be saved by employing the BT connection at the long distance and employing the UWB connection at the close distance. On the other hand, since both the first identity information and the second identity information are transmitted through the UWB, the technical solutions of the present disclosure may ensure the security of transmitting the identity information and avoid the identity information being listened based on a high security performance and an anti-relay attack characteristic of the UWB. In addition, the first device and the second device are configured to control the target smart lock to be unlocked or locked, such that an existing smart lock may be improved to have a high security and being unlocked senselessly with a lower cost, since the improvement is made without changing the hardware device of the existing smart lock.

It is noted that the above accompanying drawings are only a schematic illustration of the operations of the method according to some embodiments of the present disclosure, and are not intended to limit thereto. It is readily understood that the operations shown in the accompanying drawings described above does not indicate or limit a temporal sequence of these operations. It is also readily understood that these operations may be performed, for example, in multiple modules, either synchronously or asynchronously.

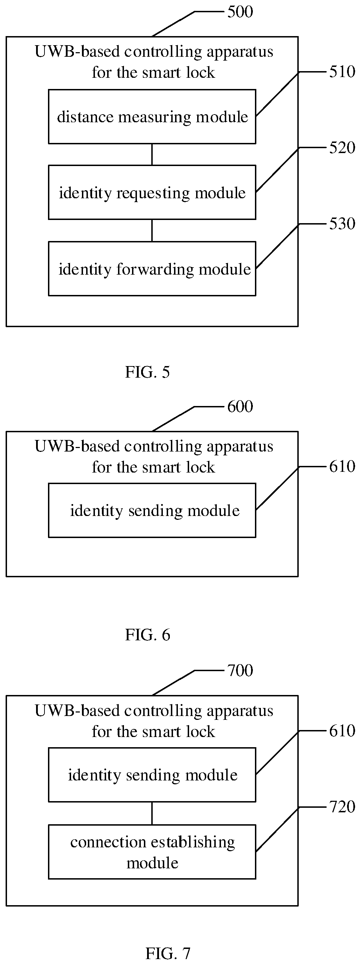

As shown in FIG. 5, a UWB-based controlling apparatus for the smart lock 500 is provided in some embodiments of the present disclosure. The apparatus 500 includes a distance measuring module 510, an identity requesting module 520, and an identity forwarding module 530.

The distance measuring module 510 is configured to monitor the first distance value between the first device and the second device based on the UWB connection between the first UWB chip and the second UWB chip of the second device.

The identity requesting module 520 is configured to send the identity request to the second device based on the UWB connection in response to the first distance value being equal to the first threshold, such that the second device feeds back first identity information corresponding to the identity request through the UWB connection.

The identity forwarding module 530 is configured to receive the first identity information and send the first identity information to a target smart lock to cause the target smart lock to determine whether to perform an unlock operation based on the first identity information.

In an embodiment, the distance measuring module 510 is further configured to wake up the first UWB chip and the second UWB chip in response to the second device satisfying the predetermined condition to cause the UWB connection to be established between the first UWB chip and the second UWB chip.

In an embodiment, the distance measuring module 510 may be configured to monitor a second distance value between the first device and the second device according to the first communication manner, and wake up the first UWB chip in response to the second distance value being equal to the second threshold value and send the waking up request to the second device through the first communication manner to cause the second UWB chip to be woken up by the second device according to the waking up request.

In an embodiment, the distance measuring module 510 may be configured to broadcast the predetermined information within the predetermined range based on the second communication manner, to cause the second UWB chip to be woken up by the second device in response to the second device receiving predetermined information, and wake up the first UWB chip in response to receiving feedback information sent from the second device. The feedback information includes the information indicating the predetermined information is received by the second device.

In an embodiment, the identity forwarding module 530 is configured to send the first identity information to the target smart lock based on a third communication manner.

In an embodiment, the distance measuring module 510 may be configured to monitor the movement speed of the second device based on the UWB connection, and set the first threshold based on the movement speed.

In an embodiment, the identity requesting module 520 is configured to monitor the direction of movement of the second device relative to the first device based on the UWB connection, send the identity request to the second device based on the UWB connection in response to the direction of the movement of the second device being close to the first device and the first distance value being equal to the first threshold value.

In an embodiment, the identity requesting module 520 is configured to send the shutdown instruction to the target smart lock to cause the target smart lock to perform the shutdown operation according to the shutdown instruction, in response to the direction of movement of the second device being away from the first device and the first distance value being equal to the third threshold.

In an embodiment, the identity forwarding module 530 is configured to receive the second identity information sent by the second device, and send the second identity information to the target smart lock to cause the target smart lock to record the unlocking authority of the second identity information.

As shown in FIG. 6, a UWB-based controlling apparatus for the smart lock 600 is also provided in some embodiments of the present disclosure and includes an identity sending module 610.

The identity sending module 610 may be configured to feed THE first identity information corresponding to identity request back to the first device through the UWB connection between the first UWB chip and the second UWB chip, in response to receiving the identity request sent by the first device, to cause the first identity information to be forwarded to the target smart lock.

In an embodiment, as shown in FIG. 7, a UWB-based controlling apparatus for the smart lock 700 may further include a connection establishing module 720. The connection establishing module 720 may be configured to wake up the first UWB chip and the second UWB chip in response to the second device satisfying the predetermined condition, to cause the UWB connection to be established between the first UWB chip and the second UWB chip.

In an embodiment, the connection establishing module 720 may be configured to wake up the second UWB chip base on the waking up request in response to receiving the waking up request which is sent by the first device based on the first communication manner.

In an embodiment, the connection establishing module 720 may be configured to wake up the second UWB chip in response to receiving predetermined information which is broadcast by the first device based on the second communication manner, and send the feedback information to the first device to cause the first UWB chip to be woke by the first device.

In an embodiment, the identity sending module 610 may be configured to send the second identity information to the first device to cause the first device to send the second identity information to the target smart lock.

Specific details of each module in the above apparatus are described in detail in the embodiments in terms of the method, reference may be made to descriptions for the embodiments in terms of the method for undisclosed details of the apparatus, which is not repeated herein.

Those skilled in the art may understand that each aspect of the present disclosure may be implemented as a system, a method, or a program product. Accordingly, each aspect of the present disclosure may be implemented in a form of a fully hardware implementation, a fully software implementation (including firmware, microcode, etc.), or a combination of a hardware and a software, which may be collectively referred to herein as a "circuit", "module", or "system".

A computer-readable storage medium is provided in some embodiments of the present disclosure. A program product capable of implementing the method described above herein is stored in the computer-readable storage medium. In some embodiments, each aspect of the present disclosure may also be implemented in a form of the program product including a program code. When the program product is run on a terminal device, the program code is configured to cause the terminal device to perform the operations of the method described in above embodiments, e.g., performing any operation or multiple operations in FIGS.3 to 5.

It is noted that the computer-readable medium described in some embodiments of the present disclosure may be a computer-readable signal medium, the computer-readable storage medium, or any combination thereof. The computer-readable storage medium may be but is not limited to a system, apparatus, or device of such as electricity, magnet, optic, electromagnet, infrared, or semiconductor, or any combination of the above. More specific examples of the computer-readable storage medium may include, but are not limited to an electrically connection with one or more wires, a portable computer disk, a hard disk, a random access memory (RAM), a read-only memory (ROM), an erasable programmable read-only memory (EPROM) or a flash memory, an optical fiber, a portable compact disk read-only memory (CD-ROM), an optical storage device, a magnetic memory device, or any suitable combination of the above.

In the present disclosure, the computer-readable storage medium may be any tangible medium including or storing a program, and the program is employed by or in combination with an instruction execution system, apparatus, or device. In the present disclosure, a computer-readable signal medium may include a data signal propagated in a baseband or as a part of a carrier wave, and the data signal carries a computer-readable program code. Such propagated data signal may take various forms, including but not limited to an electromagnetic signal, an optical signal, or any suitable combination of the two. The computer-readable signal medium may also be any computer-readable medium other than the computer-readable storage medium configured to send, propagate, or transmit the program which is employed by or in combination with the instruction execution system, apparatus, or device. The program code on the computer-readable medium may be transmitted by means of any suitable medium, including but not limited to wireless, a wire, a fiber optic cable, RF, etc., or any suitable combination of the above.

In addition, the program code for performing the operations in some embodiments of the present disclosure may be written in any combination of one or more programming languages. The programming languages includes an object-oriented programming language, such as Java, C++, etc., and a conventional procedural programming language, such as a "C" language or a similar programming language of the "C" language. The program code may be executed entirely on a computing device of the user, executed partially on a device of the user, executed as a stand-alone package, executed partially on the computing device of the user and partially on a remote computing device, or executed entirely on the remote computing device or a server. In a case involving the remote computing device, the remote computing device may be connected to the computing device of the user via any kind of network, such as a local area network (LAN) or a wide area network (WAN), or the remote computing device may be connected to an external computing device (e.g., being connected via the Internet through an Internet service provider).

Those skilled in the art may be easy to obtain other embodiments of the present disclosure based on understanding of the description and practice the embodiments of the present disclosure. The present disclosure is intended to cover any variation, application, or adaptive change for the present disclosure, which follow the general principle of the present disclosure and include common knowledge or conventional technical means in the art undisclosed herein. The description and embodiments are exemplary merely, and the true scope and spirit of the present disclosure is indicated or defined by the claims.

It is to be understood that the present disclosure is not limited to a precise structure already described above and illustrated in the accompanying drawings, and may have various modifications and changes without departing from the scope thereof. The scope of the present disclosure is limited only by the appended claims.

## Claims

1. A UWB (Ultra Wide Band)-based controlling method for a smart lock, applied to a first device with a first UWB chip, wherein a second device comprises a second UWB chip, and the method comprises:
monitoring a first distance value between the first device and the second device based on a UWB connection between the first UWB chip and the second UWB chip;
sending an identity request to the second device based on the UWB connection in response to the first distance value being equal to a first threshold, such that the second device feeds back first identity information corresponding to the identity request through the UWB connection; and
receiving the first identity information and sending the first identity information to a target smart lock to cause the target smart lock to determine whether to perform an unlocking operation based on the first identity information.

2. The method according to claim 1, further comprising:
waking up the first UWB chip and the second UWB chip in response to the second device satisfying a predetermined condition to cause the UWB connection to be established between the first UWB chip and the second UWB chip.

3. The method according to claim 2, wherein the predetermined condition comprises a second threshold value, and the second threshold value is greater than the first threshold value;
wherein the waking up the first UWB chip and the second UWB chip in response to the second device satisfying the predetermined condition, comprises:
monitoring a second distance value between the first device and the second device according to a first communication manner; and
waking up the first UWB chip in response to the second distance value being equal to the second threshold value and sending a waking up request to the second device through the first communication manner to cause the second UWB chip to be woken up by the second device according to the waking up request.

4. The method according to claim 2, wherein the predetermined condition comprises receiving predetermined information;
wherein the waking up the first UWB chip and the second UWB chip in response to the second device satisfying the predetermined condition, comprises:
broadcasting the predetermined information within a predetermined range based on a second communication manner, to cause the second UWB chip to be woken up by the second device in response to the second device receiving predetermined information; and
waking up the first UWB chip in response to receiving feedback information sent from the second device;
wherein the feedback information comprises information indicating the predetermined information is received by the second device.

5. The method according to any one of claims 1 to 4, wherein the sending the first identity information to the target smart lock, comprises:
sending the first identity information to the target smart lock based on a third communication manner.

6. The method according to claim 1, further comprising:
monitoring a movement speed of the second device based on the UWB connection, and setting the first threshold based on the movement speed.

7. The method according to claim 1, further comprising:
monitoring a direction of movement of the second device relative to the first device based on the UWB connection; and
sending the identity request to the second device based on the UWB connection in response to the direction of the movement of the second device being close to the first device and the first distance value being equal to the first threshold value.

8. The method according to claim 7, further comprising:
sending a shutdown instruction to the target smart lock to cause the target smart lock to perform a shutdown operation according to the shutdown instruction, in response to the direction of movement of the second device being away from the first device and the first distance value being equal to a third threshold.

9. The method according to claim 1, wherein before causing the target smart lock to determine whether to perform the unlock operation based on the first identity information, the method further comprises:
receiving second identity information sent by the second device, and sending the second identity information to the target smart lock to cause the target smart lock to record unlocking authority of the second identity information.

10. A UWB-based controlling method for a smart lock, applied to a second device with a second UWB chip, wherein a first device includes a first UWB chip, and the method comprises:
feeding back first identity information corresponding to identity request to the first device through a UWB connection between the first UWB chip and the second UWB chip, in response to receiving the identity request sent by the first device, to cause the first identity information to be forwarded to a target smart lock by the first device.

11. The method according to claim 10, further comprising:
waking up the first UWB chip and the second UWB chip in response to the second device satisfying a predetermined condition to cause the UWB connection to be established between the first UWB chip and the second UWB chip.

12. The method according to claim 11, wherein waking up the second UWB chip in response to the second device satisfying a predetermined condition, comprises:
waking up the second UWB chip base on a waking up request in response to receiving the waking up request which is sent by the first device based on a first communication manner.

13. The method according to claim 11, wherein the waking up the first UWB chip and the second UWB chip in response to the second device satisfying the predetermined condition, comprises:
waking up the second UWB chip in response to receiving predetermined information which is broadcast by the first device based on a second communication manner, and sending feedback information to the first device to cause the first UWB chip to be woke by the first device.

14. The method according to claim 10, further comprising:
sending second identity information to the first device to cause the first device to send the second identity information to the target smart lock.

15. A UWB-based controlling apparatus for a smart lock, applied to a first device with a first UWB chip, wherein a second device includes a second UWB chip, and the apparatus comprises:
a distance measuring module, configured to monitor a first distance value between the first device and the second device based on a UWB connection between the first UWB chip and the second UWB chip;
an identity requesting module, configured to send an identity request to the second device based on the UWB connection in response to the first distance value being equal to a first threshold, such that the second device feeds back first identity information corresponding to the identity request through the UWB connection; and
an identity forwarding module, configured to receive the first identity information and send the first identity information to a target smart lock to cause the target smart lock to determine whether to perform an unlock operation based on the first identity information.

16. The apparatus according to claim 15, wherein the distance measuring module is further configured to wake up the first UWB chip and the second UWB chip in response to the second device satisfying a predetermined condition to cause the UWB connection to be established between the first UWB chip and the second UWB chip.

17. A UWB-based controlling apparatus for a smart lock, applied to a second device with a second UWB chip, wherein a first device includes a first UWB chip, and the apparatus comprises:
an identity sending module, configured to feed first identity information corresponding to identity request back to the first device through a UWB connection between the first UWB chip and the second UWB chip, in response to receiving the identity request sent by the first device, to cause the first identity information to be forwarded to a target smart lock by the first device.

18. The apparatus according to claim 17, wherein the apparatus further comprises a connection establishing module, configured to wake up the first UWB chip and the second UWB chip in response to the second device satisfying a predetermined condition to cause the UWB connection to be established between the first UWB chip and the second UWB chip.

19. A computer-readable medium, storing a computer program, wherein when executed by a processor, the computer program is configured to implement the method according to any one of claims 1 to 14.

20. An electronic device, comprising:
a processor; and
a memory, configured to store an executable instruction of the processor;
wherein the processor is configured to execute the executable instruction to implement the method according to any one of claims 1 to 14.
